# EUROPEAN PATENT SPECIFICATION

(11) **EP 2 747 295 B1**
(45) Date of publication and mention of the grant of the patent: **21.09.2016**
(21) Application number: 13005071.9
(22) Date of filing: 23.10.2013
(51) Int. Cl.: H04B 1/16

(54) **A receiver for demodulating a multiplex signal and corresponding method**
Empfänger zur Demodulation eines Multiplexsignals und entsprechendes Verfahren
Récepteur pour la démodulation d'un signal multiplex et procédé correspondant

(30) Priority: 21.12.2012 EP 12008571
(43) Date of publication of application: 25.06.2014
(73) Proprietor: Sony Corporation, Tokyo 108-0075 (JP)
(72) Inventor: Noethlings, Rolf, 70329 Stuttgart (DE)
(74) Representative: Müller Hoffmann & Partner

(56) References cited:
- US-A1- 2011 275 339
- US-B1- 8 093 841
- "MC13024 Low Voltage Motorola C-QUAM AM Stereo Receiver - Advance Information Technical Data", , 1 January 1990 (1990-01-01), XP055112341, Retrieved from the Internet: URL:http://www.amstzone.org/MC13024.pdf [retrieved on 2014-04-05]

## Description

### BACKGROUND

### FIELD OF THE DISCLOSURE

The present disclosure relates to a receiver for demodulating a multiplex signal and a corresponding method.

### DESCRIPTION OF RELATED ART

Analog FM (frequency modulated) radio broadcasting is still the most important technology for radio, even though digital systems like digital audio broadcasting (DAB) are developed and promoted in the market.

As car radios face very severe reception situations where the reception quality changes very fast and short deep fades can be observed caused by multi-path scenarios, many strategies have been developed to improve the radios' audio quality, including antenna diversity and de-noising strategies. However, antenna diversity and de-noising systems are very expensive as they drastically increase system and/or chip size.

Due to the modulation scheme for analog FM, a stereo difference signal is more effected by a low reception quality than a mono or stereo sum signal. Hence, under bad reception conditions it has been proposed to switch from stereo reception to mono reception or to blend continuously from stereo to mono reception depending on the reception quality. Currently, stereo-mono switching or blending is typically controlled based on antenna field strength, derived from an automatic gain control AGC. The same control is used for high cutfiltering.

In mobile channel environments, where distortions are not only based on weak signals, but result also from Doppler and from multi-path reception, more severe distortions than added white Gaussian noise (AWGN) have to be faced.

The antenna field strength is not always a proper indicator in mobile environment, because due to multi-path propagation there are distortions due to echoes, which do not necessarily lead to a very weak signal. Moreover, this approach depends on the AGC time constant which may be slower than the fast changing reception situation in mobile channels.

Determining the signal-to-noise ratio (SNR) would be a further approach to determine the reception quality. However, measuring SNR directly on the stereo difference signal works well for AWGN channels. In a mobile channel situation it is possible to observe distortions especially affecting the signal component of the stereo difference signal rather than the orthogonal component. This might be caused by a distortion that is not uncorrelated to the signal and rather symmetrical than unsymmetrical.

In "MC 13024 Low Voltage Motorola C-QUAM AM Stereo Receiver - Advance Information Technical Data" available under http://www.amstzone.org/MC13024.pdf an AM stereo receiver is described, which allows switching between mono and stereo output based on a level of the pilot signal.

US 2011/275339 A1 describes methods and systems for blending the audio output from a received FM signal between stereo and mono in which the L-R (left-minus-right) gain of the FM MPX may be adjusted as a function of RF signal to noise ratio (SNR) and the L+R (left-plus-right) noise level. During blending, the L-R gain based on the RF SNR and L+R noise may be reduced in a manner such that the total noise is kept substantially constant throughout the stereo-to-mono blend region.

US 8 093 841 B1 discloses an audio receiver that may include a mono/stereo detector that causes the audio receiver to output either a monophonic or a stereophonic signal based on a difference between a pilot energy signal and a filtered pilot energy signal. The audio receiver includes a filter that filters the pilot energy signal to generate a filtered pilot energy signal, wherein a variable leakage factor associated with the filter is used to minimize a noise level of the filtered pilot energy signal and to reduce a response time of the audio receiver.

There is a need to improve a receiver for demodulating a multiplex signal comprising a stereo sum signal, a stereo difference signal and a pilot signal for improved audio quality even under mobile channel conditions.

### SUMMARY

This need is satisfied by the subject-matter of the independent claims.

According to an embodiment a receiver for demodulating a multiplex signal comprising a stereo sum signal, a stereo difference signal, and a pilot signal is disclosed, the receiver including a pilot signal analyzer configured to generate a pilot signal quality indicator based on a quality of the pilot signal, a further signal analyzer configured to generate a further signal quality indicator, an indicator combiner configured to generate a combined quality indicator based on the pilot signal quality indicator and the further signal quality indicator, and a signal processing unit configured to output a demodulated signal based on the combined quality indicator.

According to a further embodiment, a method for demodulating a multiplex signal comprising a stereo sum signal, a stereo difference signal, and a pilot signal is disclosed, said method comprising generating a pilot signal quality indicator based on a quality of the pilot signal, generating a further signal quality indicator, generating a combined quality indicator based on the pilot signal quality indicator and the further signal quality indicator, and generating a demodulated signal based on the combined quality indicator.

### BRIEF DESCRIPTION OF THE DRAWINGS

A more complete appreciation of the disclosure and of many of the attendant advantages thereof will be readily obtained as the same because better understood by reference to the following detailed description when considered in connection with the accompanying drawings, wherein:
- Fig. 1A: is a schematic block diagram of a receiver according to an embodiment of the invention.
- Fig. 1B: is a schematic block diagram of a receiver according to a further embodiment of the invention.
- Fig. 1C: is a schematic block diagram of a receiver according to a further embodiment of the invention.
- Fig. 2: illustrates a schematic flow diagram of a method according to an embodiment of the invention.
- Fig. 3A: illustrates a schematic block diagram of an indicator combiner according to an embodiment of the invention.
- Fig. 3B: schematically illustrates the relation between the stereo difference quality indicator and the difference control signal.
- Fig. 3C: illustrates schematically the relation between the pilot quality indicator and the pilot control signal.
- Fig. 4: shows a schematic block diagram of a stereo difference signal analyzer according to an embodiment of the invention.
- Fig.5A: discloses a schematic block diagram of a pilot signal analyzer according to an embodiment of the invention.
- Fig. 5B: discloses schematically the relation between an FM carrier level and a loop gain control signal for a phased locked loop.
- Fig. 6: discloses in five successive amplitude time diagrams a simulated behavior of the pilot signal analyzer depicted in Fig. 5A.
- Fig. 7: illustrates a schematic block diagram of a pilot signal analyzer according to a further embodiment of the invention.
- Fig. 8: illustrates a schematic block diagram of a phased locked loop.
- Fig. 9: illustrates schematically the spectrum of a multiplex signal.

### DESCRIPTION OF THE EMBODIMENTS

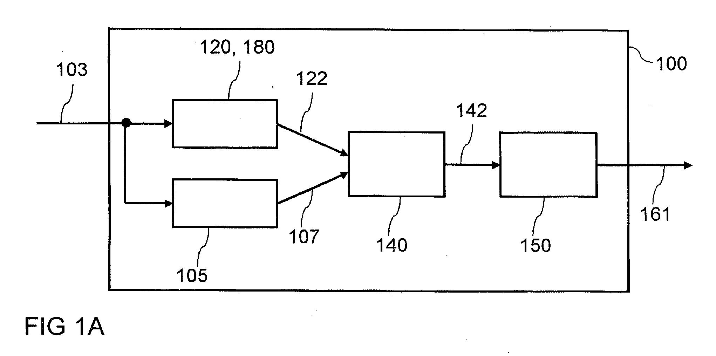

Referring now to the drawings, wherein like reference numerals designate identical or corresponding parts throughout the several views, Fig. 1A illustrates the receiver 100 according to an embodiment of the invention.

The receiver 100 is adapted to receive an input signal 103 and to demodulate, e. g. in a demodulator which is not shown, a multiplex signal comprising a stereo sum signal, a stereo difference signal and a pilot signal. The multiplex signal is generated by demodulation from the input signal 103, which corresponds to an original multiplex signal that is modulated onto a carrier wave in a transmitter and afterwards transmitted to the receiver 100. The receiver 100 includes a pilot signal analyzer 120, 180 adapted to generate a pilot signal quality indicator 122 based on the quality of the pilot signal.

The receiver 100 further includes a further signal analyzer 105 configured to generate a further signal quality indicator 107 based on a signal that is input into the further signal analyzer 105. The signal input into the further signal quality analyzer 105 might be the same demodulated signal that is input into the pilot signal analyzer 120, 180, but it is also possible that the signal input into the further signal analyzer 105 is the original input signal 103, e.g. with or without a further amplification step in an amplifier (not depicted) or any other signal derived from the original input signal 103.

The further signal quality indicator 107 and the pilot signal quality indicator 122 are input to an indicator combiner 140 that is configured to generate a combined quality indicator 142 based on the pilot signal quality indicator 122 and the further signal quality indicator 107.

A signal processing unit 150 is provided that is configured to output a demodulated signal 161 based on the combined quality indicator 142.

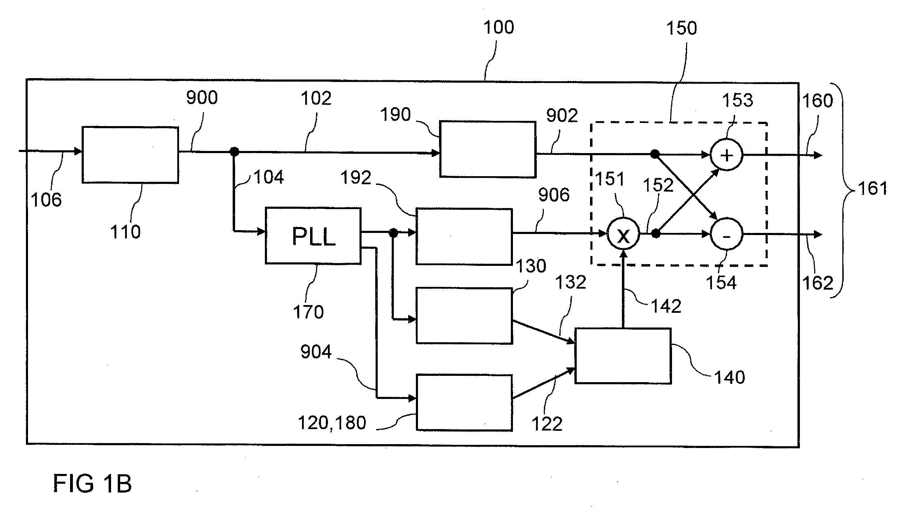

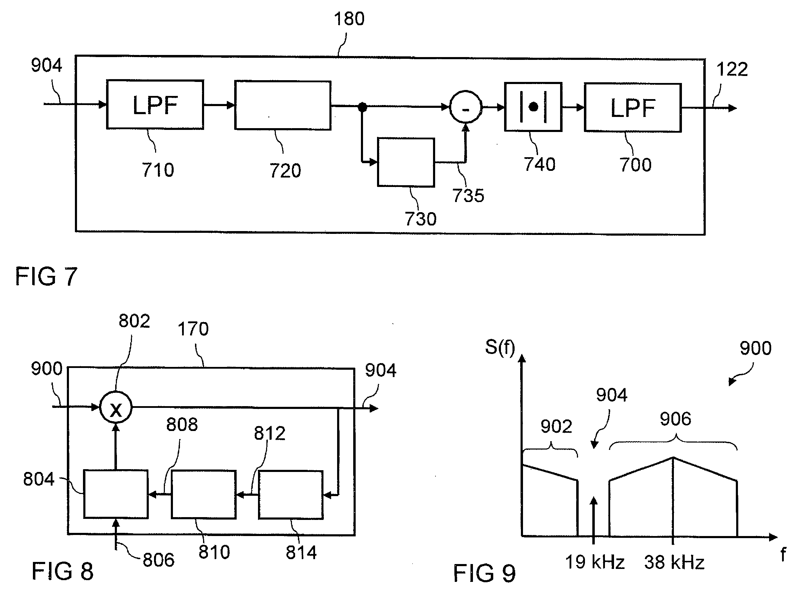

In accordance with a further embodiment depicted in Fig. 1B the receiver 100 may be an FM radio receiver and may include a first path 102 for a stereo sum signal and a second path 104 for a pilot signal and a stereo difference signal. Generally, in a reception situation the stereo sum signal, the pilot signal and the stereo difference signal are combined in a multiplex signal 900 as it is depicted in Fig. 9. Typically, in a base band a frequency modulated (FM) multiplex signal 900 includes a stereo sum signal 902, a pilot signal 904 at a frequency of 19 kHz and the stereo difference signal 906 centered on a frequency of 38 kHz. In a receiver this multiplex signal 900 is obtained after demodulating an FM signal 106 in an FM demodulator 110. The FM signal 106 might be obtained after an amplification stage (not depicted) from the input signal 103.

The receiver 100 includes the pilot signal analyzer 120, 180 connected to the second path 104. The pilot signal analyzer 120, 180 is configured to generate a pilot signal quality indicator 122 based on a quality of the pilot signal 904 derived from a phase locked loop PLL 170. The further quality analyzer 105 is implemented as a stereo difference signal analyzer 130 configured to generate a stereo difference signal quality indicator 132 based on the quality of the stereo difference signal. Both the pilot signal quality indicator 122 and the stereo difference signal quality indicator 132 are combined in an indicator combiner 140 to generate a combined quality indicator 142 based on the pilot signal quality indicator 122 and the stereo difference signal quality indicator 132. The signal processing unit 150 configured to generate a demodulated signal 161 based on the combined quality indicator 142 is included in the receiver 100.

The signal processing unit 150 might be realized as a signal combiner configured to combine the stereo sum signal 902 and a fraction of the stereo difference signal 906, said fraction being determined based on the combined quality indicator 142. However, it might be equally possible that the signal processing unit 150 includes in addition or alternatively a high-cut filter controlled by the combined quality indicator 142. Further, it is possible that the signal processing unit 150 includes a noise blanker for the entire output signal 161, the noise blanker being controlled by the combined quality indicator 142.

The signal combiner 150 might include a multiplier 151 which multiplies the stereo difference signal 906 with the stereo difference quality indicator 142 so that the fraction 152 of the stereo difference signal is outputted. The fraction 152 of the stereo difference signal is combined with the stereo sum signal 902 in an adder 153 and a subtractor 154 in accordance with known left-right-audio generation schemes, so that a left audio channel 160 and a right audio channel 162 can be outputted.

Audio filters 190, 192 might be provided for the stereo sum signal 902 and for the stereo difference signal 906.

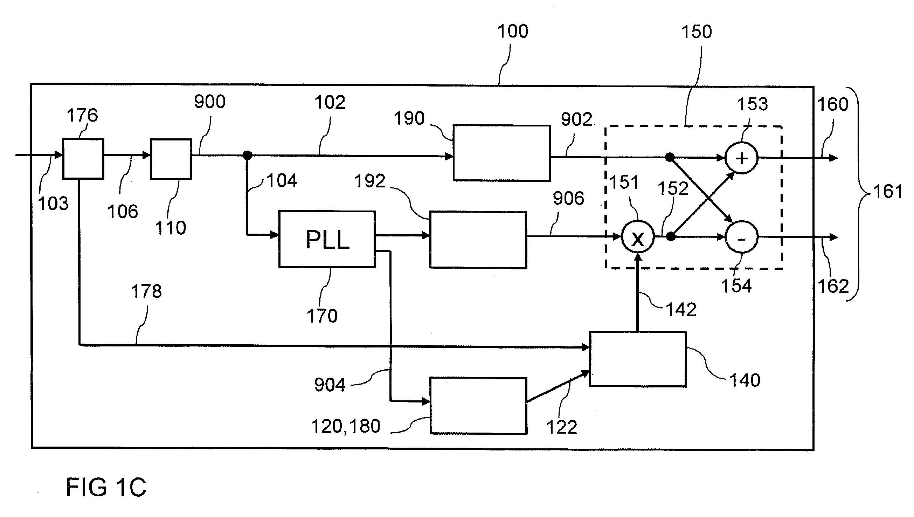

According to a further embodiment depicted in Fig. 1C, the further signal analyzer 105 might be realized as a signal/antenna level determination 176 unit configured to generate a signal level 178 of the received input signal 103 (which might be determined from an automatic control unit AGC).

A further embodiment of the further signal analyzer 105 might be realized as a bit error rate determination unit configured to determine the bit error rate (BER) of a Radio Data System (RDS) signal as said further signal quality indicator. The RDS signal might be transmitted from a radio station in parallel to the FM modulated analog radio signal.

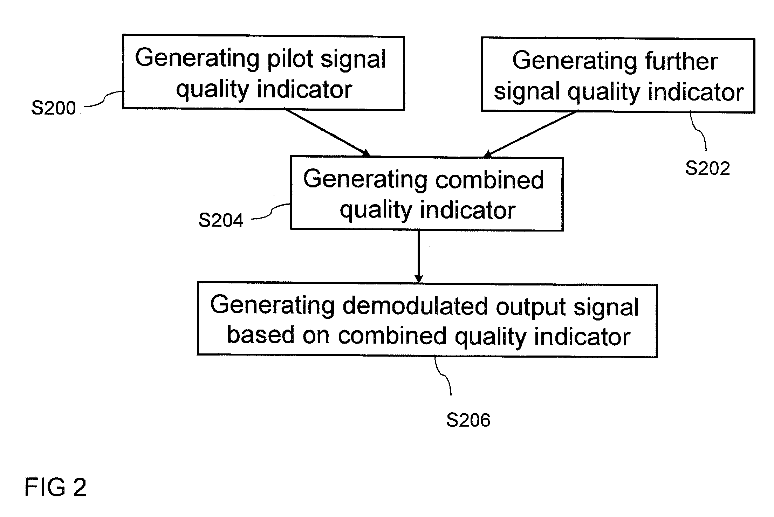

The method according to an embodiment of the invention is schematically depicted in Fig. 2. In S200 a pilot signal quality indicator is generated based on a quality of the pilot signal.

In S202, the further quality indicator is generated.

The further quality indicator might be a stereo difference signal quality indicator based on the quality of the stereo difference signal.

Then, a combined quality indicator is generated based on the pilot signal quality indicator and the further signal quality indicator in S204.

Based on the combined quality indicator in S206 the demodulated output signal is generated.

Hence, a receiver and a method for demodulating a multiplex signal comprising a stereo sum signal, a stereo difference signal, and a pilot signal are provided based on the analysis of the stereo pilot signal 904 complementing the signal-to-noise ratio analysis of the stereo difference signal 906. As depicted in Fig. 9, the pilot signal 904 is part of the FM multiplex signal 900 and its purpose is to enable a receiver to recover the phase of the stereo difference signal 906 in order to maximize their stereo channel separation.

The pilot signal 904 is a sinusoidal carrier traced in the spectrum of the FM multiplex at 19 kHz. With no distortion it has a constant envelope. In the pilot signal analyzer 120 the pilot 904 is checked for distortions as indications for distortions of the stereo difference signal 906 and it is combined with a signal-to-noise ratio analysis of the stereo difference signal in the stereo difference signal analyzer 130 to control the FM receiver, for instance its stereo mono blending.

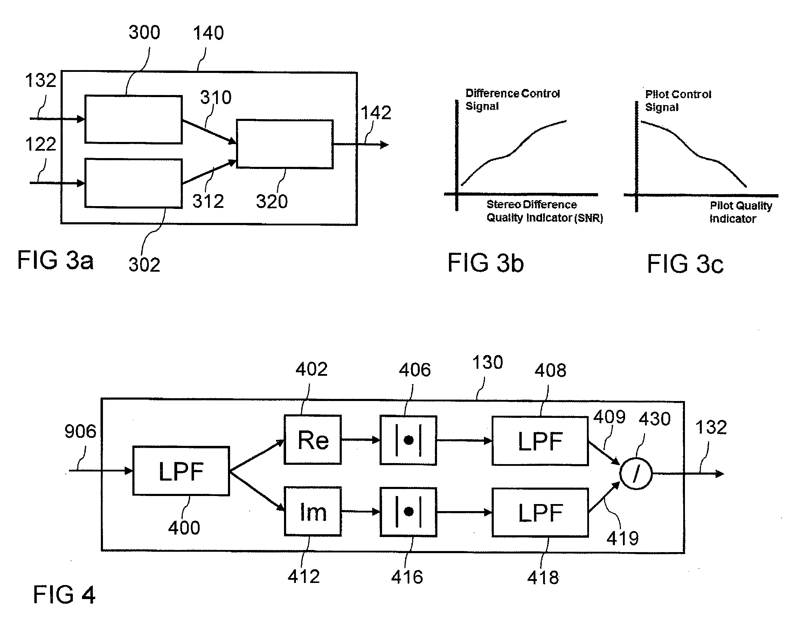

In Fig. 3A, an embodiment of the indicator combiner 140 is depicted. The pilot signal quality indicator 122 is inputted to a pilot control signal generator 302 and the stereo difference signal quality indicator 132 is inputted to a difference control signal generator 300. The difference control signal generator 300 determines a difference control signal 310 in accordance with the relation that is depicted schematically in Fig. 3B. Therein it is shown that the difference control signal is larger with a larger stereo difference quality indicator. The pilot control signal generator 302 generates a pilot control signal 312 based on the pilot signal quality indicator 122 according to the function that is schematically shown in Fig. 3C. The pilot control signal is reduced with increased pilot quality indicator value. The difference control signal 310 and the pilot control signal 312 are combined to a combined quality indicator 142 by a minimum operator 320 and the combined quality indicator 142 is the minimum of the difference control signal 310 and the pilot control signal 312. This is a conservative combinational logic, achieving the least noise but also the least remaining stereo effect of all distortion scenarios. Other schemes for combining the stereo difference quality indicator 132 and the pilot quality indicator 122 in order to derive a combined quality indicator 142 are possible as well, e.g. arithmetical combinations like "weighted average" or forming the combined quality indicator 142 in sections from the stereo difference quality indicator 132 and the pilot quality indicator 122.

In Fig. 4 the stereo difference signal analyzer 130 according to an embodiment is depicted. The stereo difference signal analyzer 130 includes a first low pass filter 400 in which the stereo difference signal 906 is inputted. Afterwards, the real value of the filtered signal is determined in a real value determination unit 402, from which the absolute value is determined in an absolute value determination unit 406 and low pass filtered in the further low pass filter 408 in order to provide an estimation 409 of the signal level of the stereo difference signal 906. The quadrature component or orthogonal component is determined in an imaginary part determination unit 412, the absolute value is determined in a further absolute value determination unit 416 and filtered in a further low pass filter 418 in order to derive a noise level estimation 419.

The signal level estimation 409 and the noise level estimation 419 are divided 430 in order to derive a stereo difference quality indicator 132. Hence, a simple way to estimate the quality of the stereo difference signal is provided. As indication for the signal level the in-phase component or real part of the complex value stereo difference signal 906 is measured, for the noise the corresponding quadrature component or imaginary part.

The stereo difference signal analysis works well if a quasi mono signal is present where even small stereo difference signal noise is suppressed. Instead of determining the absolute values in the absolute value determination units 406, 416 it is also possible to derive the signal power.

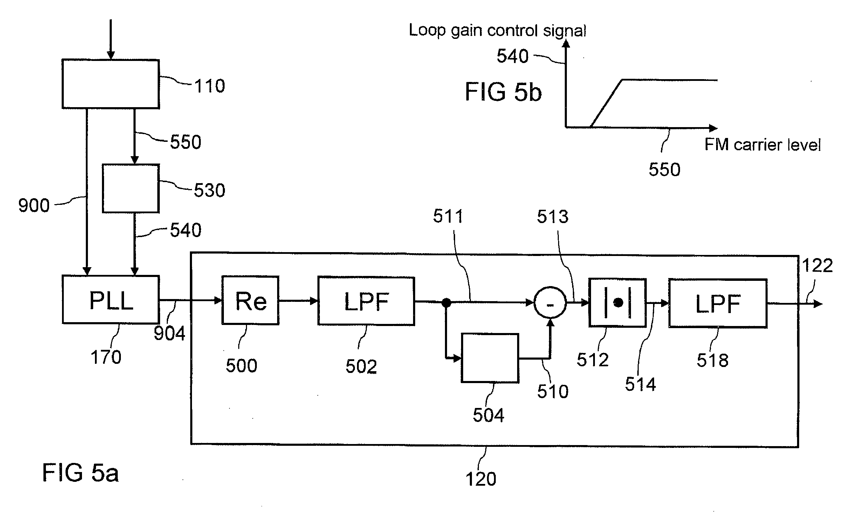

In Fig. 5A a schematic block diagram of the pilot signal analyzer 120 according to an embodiment of the invention is depicted. The pilot signal analyzer 120 analyzes the real part of the pilot signal only. Hence, a real value determination unit 500 is included, in which the pilot signal derived from the phase locked loop 170 is inputted. The real value is low pass filtered in a further low pass filter 502 and averaged with an average filter 504 so that the pilot level long time average 510 results. By subtracting the long time average 510 from the current low pass filtered real value 511, a deviation 513 from the long time average 510 is determined. The absolute value 514 of the pilot level deviation is determined in an absolute value generator 512. The absolute value 514 of the pilot level deviation is low pass filtered in a further low pass filter 518 and the pilot quality indicator 122 is derived.

The real part of the pilot 904 can be used when the phase locked loop PLL 170 is locked and stable. The pilot's envelope is not modulated and constant in case of perfect reception. If the PLL 170 is locked, the quadrature component of the complex valued pilot signal is (close to) zero and the real part equals the pilot's envelope.

To achieve the stability, the PLL 170 in the pilot recovery loop is controlled from an FM carrier level that is determined in a gain controller 530. The gain controller 530 determines the loop gain of the phase locked loop 170 based on a level of a carrier of the modulated multiplex signal derived from the FM demodulator 110. The phase locked loop 170 is controlled based on the determined gain 540. In case of a weak carrier, the signal is supposed to be unreliable and the PLL loop gain is reduced. Thus, the PLL becomes slower or even freezes. In Fig. 5B it is schematically depicted how the PLL loop gain control signal 540 depends on the FM carrier level 550. The PLL loop gain control signal might be interpreted in two different ways: the PLL loop control signal might be a value that reduces a "normal gain" of the PLL (i.e. the PLL loop control signal might be below 1 for small carrier levels and might be equal to 1 for large carrier levels) or the PLL loop control signal is the PLL gain signal, so that Fig. 5b might be interpreted as showing a lower gain for small carrier levels and the "normal" (constant) gain for large carrier levels.

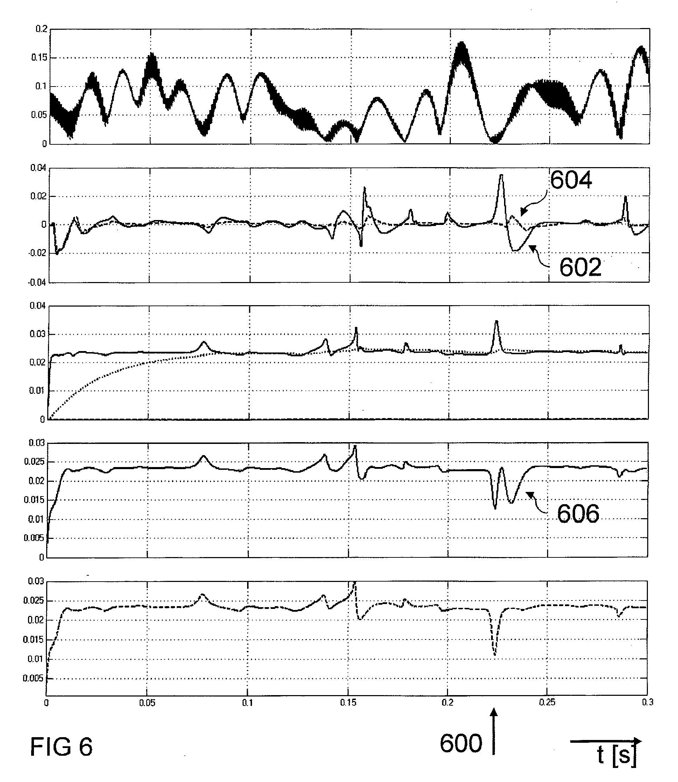

In Fig. 6 simulation results are depicted which show the influence of the modified PLL 170 as depicted in Fig. 5A. In the first row from the top the input level is depicted in arbitrary amplitude units against the time. This input level corresponds to a mobile channel situation with echoes, multi-path phenomenon and further distortions.

In the second row from the top a PLL control signal (which corresponds to the PLL control signal 808 in Fig. 8) is depicted in a solid line for an unmodified PLL and a dashed line for a modified PLL. The PLL control signal corresponds to the pilot quadrature component.

In the third row from the top the pilot envelope is depicted, wherein a solid line represents the current pilot envelope and the point curve corresponds to a low pass filtered reference.

The fourth row from the top shows the real part of the pilot with an unmodified PLL and the fifth row from the top shows the real part of the pilot with a modified PLL.

At a time 600 of 0.225 seconds it is observable how the unmodified PLL is no longer locked, since there is a quadrature component that is different from zero, resulting in a distortion in the real part and envelope, which correctly indicates a distortion of the input signal.

Directly afterwards the distortion is no longer present in the input signal (first row from the top of Fig. 6). The unmodified PLL has to lock again, resulting in an undershoot 602 in the quadrature component in the second row from the top, which results in a further distortion 606 of the real part (corresponds to a rotation of the complex pointer) in the fourth row from the top (unmodified PLL), which would indicate a distortion of the input signal (first row), which is not present.

This behavior is avoided (cf. 604), when the PLL gain is reduced or the PLL 170 is temporally frozen.

Hence, the real part of the pilot signal can be used for determining distortions, when ensuring that the PLL during distortion is still locked so that it can be avoided that it has to be locked again with a considerable delay after the distortion.

Fig. 7 shows a pilot signal analyzer 180 according to a further embodiment. The pilot signal analyzer 180 checks the current envelope of the pilot 904 against its long term average. In case of a distortion these differences will increase and result in a stronger indication 122 behind the low pass filter 700, the heavier the distortion is. The pilot signal analyzer 180 includes a low pass filter 710, an envelope detector 720 and an averaging filter 730. The averaging filter 730 determines the pilot level long time average 735 which is subtracted from the determined envelope and an absolute value is determined in an absolute value determining unit 740.

The pilot indication according to the embodiments depicted in Fig. 5A and 7 works well for multi-path effects, whereas the difference signal analysis of the stereo difference signal analyzer 130 works well in the case of a quasi mono signal, where even small difference signal noise is suppressed.

With the pilot signal analyzer according to Fig. 5A, the envelope detector 720 of the embodiment depicted in Fig. 7 is avoided and the low pass filter 710 can be reduced to a real value filter 502.

In Fig. 8 schematic diagram of a phase locked loop PLL 170 is depicted. The FM multiplex signal 900 is input and multiplied in a multiplication unit 802 with a signal from a control unit 804. The control unit generates the signal based on a pilot offset, which is 19 kHz 806 and a control signal 808 derived from a loop filter 810. The loop filter 810 receives an error signal 812 from a phase detector 814, wherein the phase detector determines the phase of the pilot signal 904.

Obviously, numerous modifications and variations of the present disclosure are possible in light of the above teachings. It is therefore to be understood that within the scope of the appended claims, the invention may be practiced otherwise than as specifically described herein.

## Claims

1. A receiver for demodulating an analogue frequency modulated multiplex signal comprising a stereo sum signal; a stereo difference signal; and a pilot signal, said receiver comprising:
a pilot signal analyzer (180) configured to generate a pilot signal quality indicator based on a quality of the pilot signal;
a further signal analyzer (105) configured to generate a further signal quality indicator;
an indicator combiner (140) configured to generate a combined quality indicator based on the pilot signal quality indicator and the further signal quality indicator; and
a signal processing unit (150) configured to output a demodulated signal based on the combined quality indicator.

2. The receiver according to claim 1, wherein the signal processing unit includes a signal combiner configured to combine the stereo sum signal and a fraction of the stereo difference signal, said fraction being determined by the combined quality indicator.

3. The receiver according to claims 1 to 2, wherein the indicator combiner includes a minimum operator for outputting a minimum value of the pilot signal quality indicator and the further signal quality indicator.

4. The receiver according to any one of claims 1 to 3, further comprising a phase-locked loop configured to control a phase of the stereo difference signal based on a phase of the pilot signal; and real part extractor configured to extract a real part of the pilot signal, wherein the pilot signal analyzer is configured to generate the pilot signal quality indicator based on a quality of the real part of the pilot signal.

5. The receiver according to claim 4, further comprising a gain controller adapted to determine a loop gain of the phase-locked loop based on a level of a carrier of the multiplex signal, wherein the phase-locked loop is controlled based on the determined loop gain.

6. The receiver according to any one of claims 1 to 3, wherein the pilot signal analyzer comprises an envelope detector and an average filter for comparing a current envelope of the pilot signal to a time average of the envelope of the pilot signal.

7. The receiver according to any one of claims 1 to 6, wherein the further signal analyzer is realized as a stereo difference signal analyzer configured to generate a stereo difference signal as said further signal quality indicator based on a quality of the stereo difference signal.

8. The receiver according to claim 7, wherein the stereo difference signal analyzer comprises a real part extractor configured to extract a real part of the stereo difference signal and an imaginary part extractor configured to extract an imaginary part of the stereo difference signal, and wherein the stereo difference signal quality indicator is based on comparing the real part of the stereo difference signal and the imaginary part of the stereo difference signal.

9. The receiver according to any one of claims 1 to 6, wherein the further signal analyzer is realized as a signal/antenna level determination unit configured to generate a signal level of a received signal as the further signal quality indicator.

10. A method for demodulating an analogue frequency modulated multiplex signal comprising a stereo sum signal; a stereo difference signal; and a pilot signal, said method comprising:
generating a pilot signal quality indicator based on a quality of the pilot signal;
generating further signal quality indicator;
generating a combined quality indicator based on the pilot signal quality indicator and the further signal quality indicator;
generating a demodulated signal based on the combined quality indicator.

11. The method according to claim 10, wherein the step of generating a demodulated signal includes combining the stereo sum signal and a fraction of the stereo difference signal, said fraction being determined by the combined quality indicator.

12. The method according to any one of claim 10 or 11, further comprising:
determining a minimum value of the pilot signal quality indicator and the further signal quality indicator.

13. The method according to any one of claims 10 to 12, further comprising
controlling with a phase-locked loop a phase of the multiplex signal based on a phase of the pilot signal;
extracting a real part of the pilot signal; and
generating the pilot signal quality indicator based on a quality of the real part of the pilot signal.

14. The method according to claim 13, further comprising
determining a loop gain of the phase-locked loop based on a level of a carrier of the multiplex signal; and
controlling the phase-locked loop based on the determined loop gain.

15. The method according to any one of claims 10 to 12, further comprising:
detecting an envelope of the pilot signal; and
comparing a current envelope of the pilot signal to a time average of the envelope of the pilot signal.

## Patentansprüche

1. Empfänger zum Demodulieren eines analogfrequenzmodulierten Multiplexsignals, das ein Stereo-Summensignal; ein Stereo-Differenzsignal; und ein Pilotsignal umfasst, wobei der Empfänger Folgendes umfasst:
einen Pilotsignal-Analysator (180), ausgelegt zum Erzeugen eines Pilotsignal-Qualitätsindikators auf der Basis einer Qualität des Pilotsignals;
einen weiteren Signalanalysator (105), ausgelegt zum Erzeugen eines weiteren Signalqualitätsindikators;
einen Indikator-Kombinierer (140), ausgelegt zum Erzeugen eines kombinierten Qualitätsindikators auf der Basis des Pilotsignal-Qualitätsindikators und des weiteren Signalqualitätsindikators; und
eine Signalverarbeitungseinheit (150), ausgelegt zum Ausgeben eines demodulierten Signals auf der Basis des kombinierten Qualitätsindikators.

2. Empfänger nach Anspruch 1, wobei die Signalverarbeitungseinheit einen Signalkombinierer umfasst, der dafür ausgelegt ist, das Stereo-Summensignal und einen Teil des Stereo-Differenzsignals zu kombinieren, wobei der Teil durch den kombinierten Qualitätsindikator bestimmt wird.

3. Empfänger nach Anspruch 1 oder 2, wobei der Indikator-Kombinierer einen Minimum-Operator zum Ausgeben eines Minimum-Werts des Pilotsignal-Qualitätsindikators und des weiteren Signalqualitätsindikators umfasst.

4. Empfänger nach einem der Ansprüche 1 bis 3, ferner umfassend:
einen Phasenregelkreis, ausgelegt zum Steuern einer Phase des Stereo-Differenzsignals auf der Basis einer Phase des Pilotsignals; und
einen Realteil-Extrahierer, ausgelegt zum Extrahieren eines Realteils des Pilotsignals, wobei der Pilotsignal-Analysator ausgelegt ist zum Erzeugen des Pilotsignal-Qualitätsindikators auf der Basis einer Qualität des Realteils des Pilotsignals.

5. Empfänger nach Anspruch 4, ferner umfassend:
einen Verstärkungsregler, ausgelegt zum Bestimmen einer Schleifenverstärkung des Phasenregelkreises auf der Basis eines Pegels eines Trägers des Multiplexsignals, wobei der Phasenregelkreis auf der Basis der bestimmten Schleifenverstärkung gesteuert wird.

6. Empfänger nach einem der Ansprüche 1 bis 3, wobei der Pilotsignal-Analysator einen Hüllkurvendetektor und ein Mittelwertfilter zum Vergleichen einer aktuellen Hüllkurve des Pilotsignals mit einem zeitlichen Mittelwert der Hüllkurve des Pilotsignals umfasst.

7. Empfänger nach einem der Ansprüche 1 bis 6, wobei der weitere Signalanalysator als ein Stereo-Differenzsignalanalysator realisiert ist, ausgelegt zum Erzeugen eines Stereo-Differenzsignals als der weitere Signalqualitätsindikator auf der Basis einer Qualität des Stereo-Differenzsignals.

8. Empfänger nach Anspruch 7, wobei der Stereo-Differenzsignalanalysator einen Realteil-Extrahierer, ausgelegt zum Extrahieren eines Realteils des Stereo-Differenzsignals, und einen Imaginärteil-Extrahierer, ausgelegt zum Extrahieren eines Imaginärteils des Stereo-Differenzsignals, umfasst und wobei der Stereo-Differenzsignal-Qualitätsindikator auf Vergleich des Realteils des Stereo-Differenzsignals und des Imaginärteils des Stereo-Differenzsignals basiert.

9. Empfänger nach einem der Ansprüche 1 bis 6, wobei der weitere Signalanalysator als eine Signal-/Antennenpegelbestimmungseinheit realisiert ist, ausgelegt zum Erzeugen eines Signalpegels eines Empfangssignals als den weiteren Signalqualitätsindikator.

10. Verfahren zum Demodulieren eines analogfrequenzmodulierten Multiplexsignals, das ein Stereo-Summensignal; ein Stereo-Differenzsignal; und ein Pilotsignal umfasst, wobei das Verfahren Folgendes umfasst:
Erzeugen eines Pilotsignal-Qualitätsindikators auf der Basis einer Qualität des Pilotsignals;
Erzeugen eines weiteren Signalqualitätsindikators;
Erzeugen eines kombinierten Qualitätsindikators auf der Basis des Pilotsignal-Qualitätsindikators und des weiteren Signalqualitätsindikators;
Erzeugen eines demodulierten Signals auf der Basis des kombinierten Qualitätsindikators.

11. Verfahren nach Anspruch 10, wobei der Schritt des Erzeugens eines demodulierten Signals Kombinieren des Stereo-Summensignals und eines Teils des Stereo-Differenzsignals umfasst, wobei der Teil durch den kombinierten Qualitätsindikator bestimmt wird.

12. Verfahren nach einem der Ansprüche 10 oder 11, ferner umfassend:
Bestimmen eines Minimum-Werts des Pilotsignal-Qualitätsindikators und des weiteren Signalqualitätsindikators.

13. Verfahren nach einem der Ansprüche 10 bis 12, ferner umfassend:
Steuern einer Phase des Multiplexsignals mit einem Phasenregelkreis auf der Basis einer Phase des Pilotsignals;
Extrahieren eines Realteils des Pilotsignals; und
Erzeugen des Pilotsignal-Qualitätsindikators auf der Basis einer Qualität des Realteils des Pilotsignals.

14. Verfahren nach Anspruch 13, ferner umfassend:
Bestimmen einer Schleifenverstärkung des Phasenregelkreises auf der Basis eines Pegels eines Trägers des Multiplexsignals; und
Steuern des Phasenregelkreises auf der Basis der bestimmten Schleifenverstärkung.

15. Verfahren nach einem der Ansprüche 10 bis 12, ferner umfassend:
Detektieren einer Hüllkurve des Pilotsignals; und
Vergleichen einer aktuellen Hüllkurve des Pilotsignals mit einem zeitlichen Mittelwert der Hüllkurve des Pilotsignals.

## Revendications

1. Récepteur permettant de démoduler un signal de multiplexage à modulation de fréquence analogique comprenant un signal de somme stéréo ; un signal de différence stéréo ; et un signal pilote, ledit récepteur comprenant :
un analyseur (180) d'un signal pilote configuré pour générer un indicateur de qualité d'un signal pilote sur la base d'une qualité du signal pilote ;
un analyseur (105) d'un signal supplémentaire configuré pour générer un indicateur de qualité d'un signal supplémentaire ;
un combinateur (140) d'indicateur configuré pour générer un indicateur de qualité combiné sur la base de l'indicateur de qualité du signal pilote et de l'indicateur de qualité du signal supplémentaire ; et
une unité (150) de traitement de signal configurée pour délivrer en sortie un signal démodulé sur la base de l'indicateur de qualité combiné.

2. Récepteur selon la revendication 1, dans lequel l'unité de traitement de signal comprend un combinateur de signal configuré pour combiner le signal de somme stéréo et une fraction du signal de différence stéréo, ladite fraction étant déterminée par l'indicateur de qualité combiné.

3. Récepteur selon la revendication 1 ou 2, dans lequel le combinateur d'indicateur comprend un opérateur minimum permettant de délivrer en sortie une valeur minimum de l'indicateur de qualité du signal pilote et de l'indicateur de qualité du signal supplémentaire.

4. Récepteur selon l'une quelconque des revendications 1 à 3, comprenant en outre
une boucle à verrouillage de phase configurée pour commander une phase du signal de différence stéréo sur la base d'une phase du signal pilote ; et
un extracteur d'une partie réelle configuré pour extraire une partie réelle du signal pilote, dans lequel l'analyseur de signal pilote est configuré pour générer l'indicateur de qualité du signal pilote sur la base d'une qualité de la partie réelle du signal pilote.

5. Récepteur selon la revendication 4, comprenant en outre
un contrôleur de gain adapté pour déterminer un gain de boucle de la boucle à verrouillage de phase sur la base d'un niveau d'une porteuse du signal de multiplexage, dans lequel la boucle à verrouillage de phase est commandée sur la base du gain de boucle déterminé.

6. Récepteur selon l'une quelconque des revendications 1 à 3, dans lequel l'analyseur de signal pilote comprend un détecteur d'enveloppe et un filtre de moyennes permettant de comparer une enveloppe actuelle du signal pilote à une moyenne temporelle de l'enveloppe du signal pilote.

7. Récepteur selon l'une quelconque des revendications 1 à 6, dans lequel l'analyseur de signal supplémentaire est réalisé en tant qu'analyseur de signal de différence stéréo configuré pour générer un signal de différence stéréo en tant que ledit indicateur de qualité du signal supplémentaire sur la base d'une qualité du signal de différence stéréo.

8. Récepteur selon la revendication 7, dans lequel l'analyseur de signal de différence stéréo comprend un extracteur d'une partie réelle configuré pour extraire une partie réelle du signal de différence stéréo, et un extracteur d'une partie imaginaire configuré pour extraire une partie imaginaire du signal de différence stéréo, et dans lequel l'indicateur de qualité du signal de différence stéréo est basé sur la comparaison de la partie réelle du signal de différence stéréo et de la partie imaginaire du signal de différence stéréo.

9. Récepteur selon l'une quelconque des revendications 1 à 6, dans lequel l'analyseur de signal supplémentaire est réalisé en tant qu'unité de détermination d'un niveau de signal/antenne configurée pour générer un niveau de signal d'un signal reçu en tant que l'indicateur de qualité du signal supplémentaire.

10. Procédé permettant de démoduler un signal de multiplexage à modulation de fréquence analogique comprenant un signal de somme stéréo ; un signal de différence stéréo ; et un signal pilote, ledit procédé comprenant les étapes consistant à :
générer un indicateur de qualité du signal pilote sur la base d'une qualité du signal pilote ;
générer un indicateur de qualité du signal supplémentaire ;
générer un indicateur de qualité combiné sur la base de l'indicateur de qualité du signal pilote et de l'indicateur de qualité du signal supplémentaire ;
générer un signal démodulé sur la base de l'indicateur de qualité combiné.

11. Procédé selon la revendication 10, dans lequel l'étape consistant à générer un signal démodulé comprend le fait de combiner le signal de somme stéréo et une fraction du signal de différence stéréo, ladite fraction étant déterminée par l'indicateur de qualité combiné.

12. Procédé selon l'une quelconque des revendications 10 ou 11, comprenant en outre l'étape consistant à :
déterminer une valeur minimum de l'indicateur de qualité du signal pilote et de l'indicateur de qualité du signal supplémentaire.

13. Procédé selon l'une quelconque des revendications 10 à 12, comprenant en outre les étapes consistant à :
commander avec une boucle à verrouillage de phase une phase du signal de multiplexage sur la base d'une phase du signal pilote ;
extraire une partie réelle du signal pilote ; et
générer l'indicateur de qualité du signal pilote sur la base d'une qualité de la partie réelle du signal pilote.

14. Procédé selon la revendication 13, comprenant en outre les étapes consistant à :
déterminer un gain de boucle de la boucle à verrouillage de phase sur la base d'un niveau d'une porteuse du signal de multiplexage ; et
commander la boucle à verrouillage de phase sur la base du gain de boucle déterminé.

15. Procédé selon l'une quelconque des revendications 10 à 12, comprenant en outre les étapes consistant à :
détecter une enveloppe du signal pilote ; et
comparer une enveloppe actuelle du signal pilote à une moyenne temporelle de l'enveloppe du signal pilote.
